(19) Europäisches Patentamt
European Patent Office
Office européen des brevets

(11) **EP 0 462 843 B1**

(12) **EUROPEAN PATENT SPECIFICATION**

(45) Date of publication and mention
of the grant of the patent:
**29.01.1997 Bulletin 1997/05**

(51) Int Cl.$^6$: **G11B 11/10**

(21) Application number: **91305639.6**

(22) Date of filing: **21.06.1991**

(54) **Magneto-optical method and apparatus for recording/reproducing data**

Magnetooptisches Verfahren und Gerät zur Aufzeichnung/Wiedergabe von Daten

Appareil et méthode d'enregistrement/reproduction des données par voie magnéto-optique

(84) Designated Contracting States:
**DE FR GB NL**

(30) Priority: **21.06.1990 JP 163510/90**
**20.05.1991 JP 114919/91**

(43) Date of publication of application:
**27.12.1991 Bulletin 1991/52**

(60) Divisional application: **96201841.2**

(73) Proprietor: **SEIKO EPSON CORPORATION**
**Shinjuku-ku Tokyo-to (JP)**

(72) Inventors:
• **Shimokawato, Satoshi**
**Suwa-Shi, Nagano-Ken (JP)**
• **Miyazawa, Hiromu**
**Suwa-Shi, Nagano-Ken (JP)**
• **Mikoshiba, Toshiaki**
**Suwa-Shi, Nagano-Ken (JP)**

(74) Representative: **Charlton, Peter John et al**
**Elkington and Fife**
**Prospect House**
**8 Pembroke Road**
**Sevenoaks, Kent TN13 1XR (GB)**

(56) References cited:
EP-A- 0 257 530    EP-A- 0 318 925
EP-A- 0 435 425    US-A- 4 932 012

## Description

The present invention relates to a magneto-optical method and apparatus for recording/reproducing data, and more specifically to the method and apparatus for enabling data to be directly overwritten.

Recently, magneto-optical recording/reproducing technique adopting a perpendicular magnetized film for data memorizing has widely been researched as one of optical rewritable recording method, and the first generation recording/reproducing apparatus and recording medium have already been put into practical use. In the first generation recording/reproducing apparatus, however, when information data are rewritten, since two stages of erasing already written data and of writing new data are required, it is impossible to realize the so-called direct overwrite which requires no erasing operation, and therefore, the substantial data transfer speed is considered to be lower than that of the rigid disk device.

To overcome the above problem, various techniques are now being developed to realize the direct overwrite. For example, a technique for adopting an exchange coupled magnetic multilayer film as the recording medium layer has been proposed, as disclosed in Japanese Published Unexamined (Kokai) Patent Appln. No. 62-175948. In this direct overwrite technique, a multilayer formed by laminating a first magnetic layer (referred to as a memory layer) and a second magnetic layer (referred to as a reference layer) on a substrate in sequence is used as the recording medium. The data are recorded by modulating the intensity of a recording laser beam into binary according to recorded data and by irradiating the recording laser beam upon the recording medium. In this recording operation, when a laser beam for heating the medium at a relatively low temperature is irradiated, magnetic domains of the reference layer already initialized prior to recording are transcribed to the memory layer by an exchange coupling force generated between the two magnetic layers (referred to as L recording). On the other hand, when a laser beam for heating the medium at a relatively high temperature is irradiated, the magnetic domains of the reference layer are reversed by the recording magnetic field, and then the reversed magnetic domains are transcribed to the memory layer by the exchange coupling force between the two magnetic layers (referred to as H recording). In the reproduction operation, after the reference layer has been initialized, a laser beam is irradiated upon the recording medium to reproduce recorded data.

In this method, a data recording/reproducing apparatus can be realized by simply attaching a fixed magnetic field generating mechanism for initializing the magnetization direction of the reference layer, to the first generation recording/reproducing apparatus for generating a recording magnetic field by a fixed magnet and an intensity-modulated laser beam.

European Patent Application No. 90309857.2 published as EP-A- 0 435 425 describes the initialization of the reference layer of a magneto-optical recording medium. This prior art was published on 3rd July 1991 and so falls under Article 54(3) EPC.

In the above-mentioned prior-art method, however, there exists a problem in that already recorded data are destructed when the intensity of the laser beam erroneously increases in reproducing operation or when the ambient temperature or the apparatus temperature rises in reproducing operation (even at the normal reproducing laser beam intensity). The tendency of the above drawbacks increases with increasing sensitivity of the recording medium, in particular.

With these problems in mind, therefore, the object of the present invention is to provide a magneto-optical method for recording/reproducing data having a wide allowable range to the ambient temperature and the reproducing laser beam intensity in reproducing operation and suitable for use in a high sensitive recording medium, in particular.

To achieve the above-mentioned object, the present invention provides a magneto-optical method of recording/reproducing data according to claim 1.

In the magneto-optical method of recording/reproducing data according to the present invention, there is used a magneto-optical recording medium formed by laminating at least two mutually exchange-coupled magnetic layers on a substrate. The required relationship between the first magnetic layer (referred to as memory layer) and the second magnetic layer (referred to as reference layer) in coercive force H at room temperature and in Curie temperature T is as follows:

$$H_1 > H_2$$

$$T_1 < T_2$$

where

$H_1$ is coercive force at room temperature of the memory layer,
$H_2$ is coercive force at room temperature of the reference layer,
$T_1$ is Curie temperature of the memory layer, and
$T_2$ is Curie temperature of the reference layer.

Further, the magnetic characteristics of the magneto-optical recording medium of the present invention must satisfy the following relationship in the same way, as disclosed in Japanese Published Unexamined (Kokai) Patent Appli. Nos. 62-175948 and 63-153752:

$$H_1 > H_2 > \sigma/2M_s \cdot h$$

where $\sigma$ denotes the interface wall energy density between the two layers; $M_s$ denotes the saturation mag-

netization of the reference layer; and h denotes the film thickness of the reference layer.

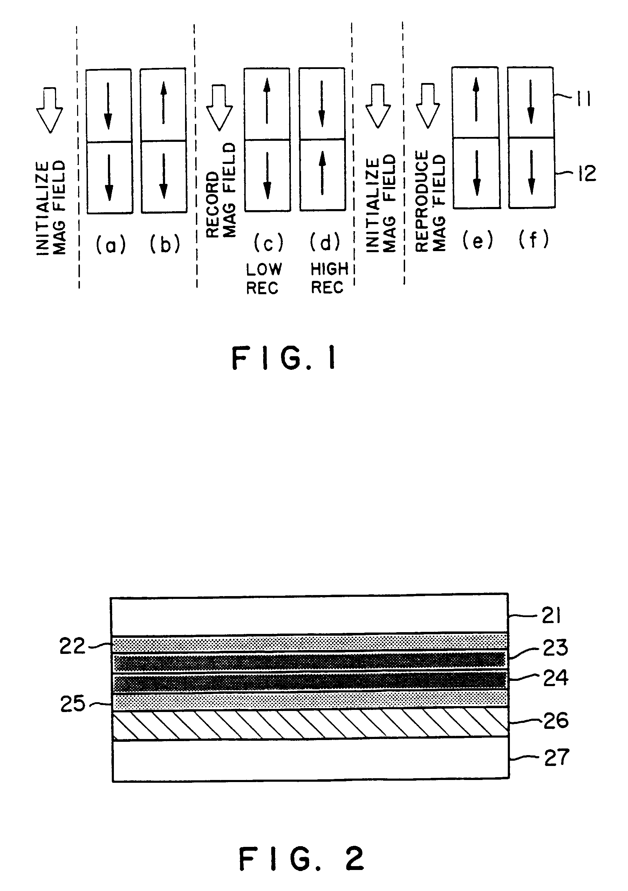

Fig. 1 shows the apparent magnetized status of the memory layer and the reference layer by arrows at each process in the magneto-optical recording/reproducing method according to the present invention, in which rare earth-transition metal alloy films satisfying the above-mentioned conditions are used as the memory layer and the reference layer. Further, the magnetization status will be explained hereinbelow by taking, as an example, a combination of the memory layer formed of a ferrimagnetic film dominant in transition element magnetic moment at room temperature and the reference layer formed of a ferrimagnetic film dominant in rare-earth element magnetic moment and having a compensation point between room temperature and the Curie point.

The magnetization direction of the reference layer 12 is arranged uniform by applying an initializing magnetic field of an appropriate strength prior to recording operation. The magnetization direction of the memory layer 11 is in either status (a) or (b) according to the already recorded binary data.

Thereafter, the following magnetization status can be realized by applying an appropriate recording magnetic field lower in intensity than the initializing magnetic field in the same direction as the initializing magnetic field and simultaneously by irradiating a laser beam upon the magnetic layer so as to obtain a relatively low heated condition (referred to as the first heating) or another laser beam upon the magnetic layer so as to obtain a relatively high heated condition (referred to as the second heating). The intensity of the recording laser beam at the first heating is determined to be relatively lower than that at the second heating when irradiated upon the magnetic layer continuously. Or else, the recording laser beam at the first heating is irradiated intermittently upon the magnetic layer as pulse. Further, the direction of the recording magnetic field is the same as that of the initializing magnetic field in the above description. However, it is necessary to determine the direction of the recording magnetic field so as to be opposite to that of the initializing magnetic field according to the characteristics of the used magneto-optical recording medium.

At the first heating, the magnetization direction of the reference layer 12 will not-change. However, the magnetization direction of the memory layer 11 is changed from either status (a) or (b) to the status (c) because the exchange energy with the magnetization of the reference layer 12 is low. On the other hand, at the second heating, the magnetization direction of the reference layer 12 is reversed, and that of the memory layer 11 is changed from either status (a) or (b) to the status (d) because the exchange energy with the magnetization of the reference layer 12 is low.

The status (c) or (d) can be changed to (e) or (f), respectively by applying an initializing magnetic field to the magnetic medium immediately before data are reproduced. The magnetization direction of the record layer 11 in status (e) or (f) corresponds to the first or second heated condition, respectively, so that data can be rewritten when a disk rotates once.

On the other hand, the mechanism of data destruction caused when reproduced by the prior-art recording/reproducing method has been studied in detail by the inventors and the following points have been clarified. In the case where data recorded in accordance with the above-mentioned method are reproduced in accordance with the prior-art method, a reproducing laser beam is usually irradiated upon the magnetic layer from the memory layer side without applying any magnetic field after the recording magnetic field has been removed. However, in case the intensity of the reproducing laser beam becomes high, the magnetization direction of the memory layer 11 is reversed due to the same principle as in the L recording (first heating) of the above-mentioned recording process, so that the recording area as shown in the magnetization status (f) changes to that as shown in the status (c), thus resulting in destruction of data recorded in the memory layer 11. In addition, this phenomenon can be recognized more clearly when the ambient temperature or the apparatus temperature rises.

The most important point of the present invention is to prevent recorded data from being destructed in the reproducing operation, by applying a reproducing magnetic field to an area irradiated with the reproducing laser beam in the direction the same as the recording magnetic field. The intensity of the reproducing magnetic field is preferably equal to or higher than that of the recording magnetic field. However, the intensity of the reproducing magnetic field must be low to such an extent that no H recording occurs, which is sufficiently lower than that of the initializing magnetic field. Here, it should be noted that in the data reproducing process according to the present invention, as far as a reproducing magnetic field with an appropriate intensity is applied, data will not be destructed even if a reproducing laser beam with an intensity higher than that of the laser beam for the L record process is irradiated upon the recording medium. This indicates that the present invention can realize a high data reading reliability even when a magneto-optical recording medium with higher recording sensitivity is used.

In the present invention, the initializing magnetic field and the recording magnetic field are determined preferably within a range 80 000 to 400 000 A/m (1000 to 5000 Oe) and 8 000 to 32 000 A/m (100 to 4000 Oe) respectively, according to the used recording medium. Further, the intensity of the reproducing magnetic field is equal to or higher than that of the recording magnetic field to such an extent that the H recording will not occur. However, the intensity of the reproducing magnetic field is preferably 80 000 A/m (1000 Oe) or less from the practical standpoint.

In the practical magneto-optical recording/reproducing apparatus, it is preferable to generate the recording magnetic field by a permanent magnet from the power consumption standpoint. Therefore, the present invention can be embodied by using the recording magnetic field as the reproducing magnetic field as it is. In order to further improve the reproducing stability, however, it is preferable to provide a mechanism for generating a reproducing magnetic field higher in intensity than the recording magnetic field, for instance by applying a magnetic field obtained by superposing another magnetic field upon that generated by a permanent magnet, to the area irradiated with the reproducing laser beam, at only the reproducing process. Instead, it is also possible to use a reproducing magnetic field generated by a permanent magnet and a recording magnetic field obtained as a resultant magnetic field of the reproducing magnetic field and the permanent magnet magnetic field applied in the opposite direction or else to generate both the magnetic fields by electromagnets.

Further, in the above description, the magneto-optical recording medium is an exchange coupled film composed of two magnetic layers. Without being limited thereto, a magneto-optical recording medium provided with an intermediate layer effective to suppress the interface wall energy density between the two layers can be effectively applied to the present invention.

Fig. 1 is an illustration for assistance in explaining magnetization directions of the memory layer and the reference layer at the respective process of the magneto-optical recording/reproducing method according to the present invention;

Fig. 2 is a cross-sectional illustration for assistance in explaining an exemplary construction of the magneto-optical recording medium to which the present invention can be applied;

Fig. 3 is a diagrammatical view for assistance in explaining an embodiment of the magneto-optical recording/reproducing apparatus according to the present invention;

Fig. 4 is a diagrammatical view for assistance in explaining another embodiment;

Fig. 5 is a graphical representation showing the dependency of the carrier-to-noise ratio (C/N) of reproduced signals upon the reproducing magnetic field intensity, obtained when data are reproduced at different laser beam intensity; and

Fig. 6 is a graphical representation showing the relationship between the C/N ratio and the number of repeated reproductions, in which the solid line indicates the relationship obtained by the magneto-optical recording/reproducing method according to the present invention and the dashed line indicates that obtained by the prior-art magneto-optical recording/reproducing method.

Embodiments of the present invention will be described in detail hereinbelow.

Fig. 2 shows an exemplary cross-sectional illustration of the magneto-optical recording medium to which the method of the present invention is applied. The medium is comprised of a disk-shaped transparent substrate 21 formed with guide grooves (not shown) for tracking servomechanism; a dielectric layer 22 formed of silicon nitride by sputtering; a memory layer 23 formed of NdDyFeCo; a reference layer 24 formed of DyFeCo; and a protective layer 25 formed of silicon nitride, which are all laminated in sequence. In addition, another substrate 27 is bonded onto the protective layer 25 by hot-melt resin 26. The thicknesses of the layers 22, 23, 24 and 25 are 80 nm, 100 nm, 100 nm, and 80 nm, respectively. The memory layer 23 is provided with magnetic characteristics dominant in transition metal magnetic moment at room temperature, and the reference layer 24 is provided with magnetic characteristics dominant in rare-earth magnetic moment and having a compensation point at temperature higher than room temperature.

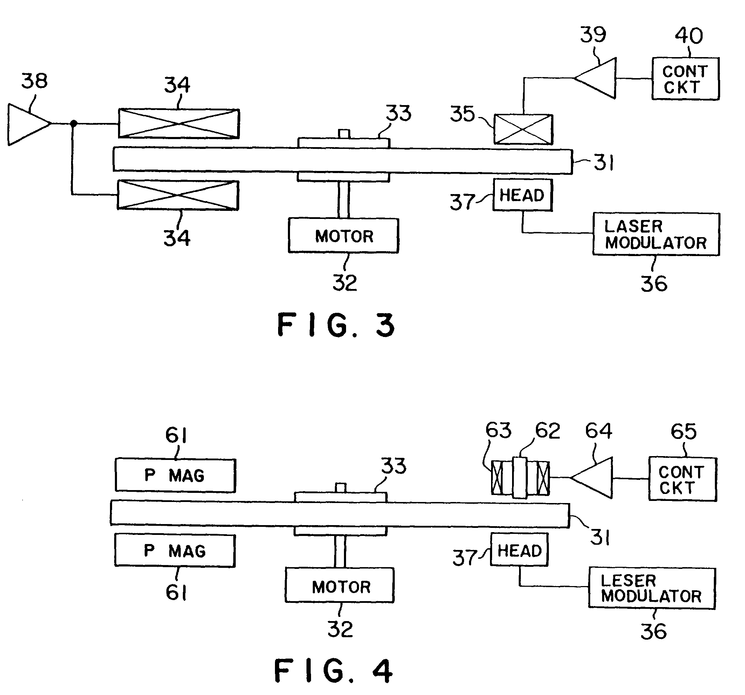

Fig. 3 shows an embodiment of the magneto-optical apparatus for recording/reproducing data according to the present invention. The afore-mentioned magneto-optical recording medium 31 is attached to a spindle motor 32 via a medium clamp mechanism 33. When the spindle motor 32 rotates, the recording medium 31 is first initialized being passed through an initializing magnetic field generated by an initializing electromagnet 34 driven by a driver 38, and then irradiated with a recording laser beam modulated by a laser modulator 36 and emitted from an optical head 37 within a recording magnetic field generated by a recording/reproducing electromagnet 35 driven by another driven 39. In reproducing operation, on the other hand, the recording medium 31 is initialized again by the initializing magnetic field and then irradiated with a reproducing laser beam emitted from the optical head 37 within a reproducing magnetic field generated by the recording/reproducing electromagnet 35. In this embodiment, the recording magnetic field and the reproducing magnetic field are both generated by the same electromagnet 35. A control circuit 40 controls power supplied to the electromagnet 35 in recording and reproducing operation, respectively. The reproducing magnetic field intensity is preferably higher than the recording magnetic field intensity but lower than the initializing magnetic field intensity. An appropriate strength is selected according to the magnetic characteristics of the recording medium, for instance, within a range from 80 000 to 400 000 A/m (1000 to 5000 Oe) for the initializing magnetic field, from 8 000 to 32 000 A/m (100 to 400 Oe) for the recording magnetic field, and 80 000 A/m (1000 Oe) or less for the reproducing magnetic field.

Further, in Fig. 3, a permanent magnet is usable as the initializing electromagnet 35. In the case where the recording magnetic field intensity is equal to the reproducing magnetic field intensity, it is possible to use a permanent magnet as the recording/reproducing magnet 35 together.

Fig. 4 shows another embodiment of the present invention, in which the initializing magnet 61 is a permanent magnet. To generate the recording and reproducing magnetic fields, a combination magnet composed of a cylindrical permanent magnet 62 and an annular electromagnet 63 disposed coaxially with the permanent magnet 62 is disposed. The electromagnet 63 is driven by a driver 64 controlled by a control circuit 65. The control circuit 65 controls the driver 64 in such a way that no current flows through the electromagnet 63 in recording operation but current flows through the electromagnet 63 to generate a magnetic field in the same direction as that of the permanent magnet 62 in reproducing operation. Therefore, the magnetic field generated by the permanent magnet 62 is used as the recording magnet field, and the magnet field obtained by superposing the magnetic field of the permanent magnet 62 upon that of the electromagnet 63 is used as the reproducing magnet field.

Instead, the control circuit 65 controls the driver 64 in such a way that current flows through the electromagnet 63 to generate a magnetic field in the direction opposite to that of the permanent magnet 62 in recording operation but no current flows through the electromagnet 63 in reproducing operation. Accordingly, a relatively low magnetic field intensity obtained by superposing the magnetic field of the permanent magnet 62 upon that of the electromagnet 63 is used as the recording magnetic field, and the magnetic field generated by the permanent magnet 62 is used as the reproducing magnetic field.

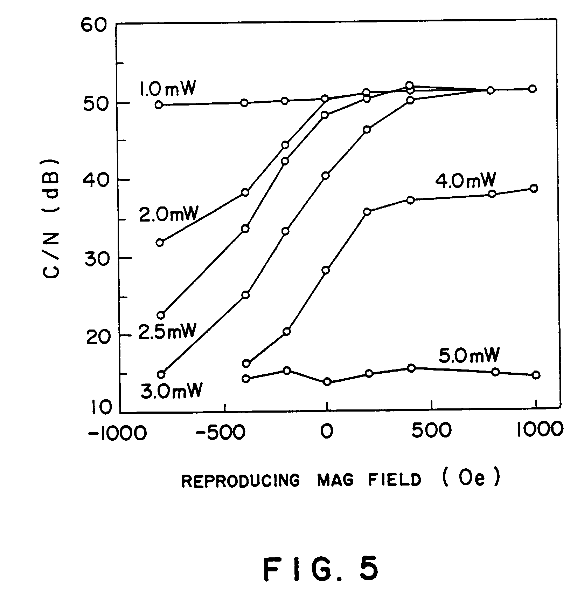

The test results of recorded data stability when reproduced from the magneto-optical recording medium by use of the magneto-optical recording/reproducing apparatus shown in Fig. 3 will be described hereinbelow. The recording medium as shown in Fig. 2 is rotated at a linear velocity of about 5.6 m/sec and passed through the initializing magnetic field of 320 000 A/m (4000 Oe). A recording magnetic field of 16 000 A/m (200 Oe) in strength is applied to the recording medium in the direction the same as the initializing magnetic field at a position not subjected to the influence of the initializing magnetic field, and a modulated laser beam with a bottom power of 3.0 mW, a peak power of 12.0 mW, a carrier frequency of 3.7 MHz, and a duty ratio of 30% is focused onto the recording medium for recording data, in which the L recording (first heating) is achieved at the laser beam bottom and the H recording (second heating) is achieved at the laser beam peak. Data are reproduced by irradiating a reproducing laser beam of a constant strength upon the memory layer within the reproducing magnetic field of a predetermined strength. The reproducing area passes through the initializing magnetic field immediately before the reproducing operation starts. Fig. 5 shows the dependency of the ratio of carrier to noise (C/N) of the reproduced signal upon the reproducing magnetic field intensity, in which the recorded data are reproduced by various laser beams of different intensities, and the positive sign of the reproducing magnetic field indicates that the reproducing magnetic field is applied in the same direction as the recording magnetic field and the negative sign thereof indicates that the reproducing magnetic field is applied in the direction opposite to the recording magnetic field.

Fig. 5 indicates that when data are reproduced by a relatively low reproducing power of about 1 mW, the C/N ratio is almost constant irrespective of the sign and intensity of the reproducing magnetic field; however, the C/N ratio decreases with increasing reproducing power in lower reproducing magnetic field intensity. Further, the C/N ratio is 38.0 dB when data are reproduced at a reproducing magnetic field of zero and at a reproducing power of 3.0 mW. However, it was found that the C/N ratio dropped down to 37.5 dB when data were reproduced at a reproducing power of 1.0 mW after having been reproduced at 3.0 mW. These C/N ratios are smaller than that of 50 dB obtained when data are reproduced at 1.0 mW immediately after recording. This may be due to the fact that magnetic domain patterns representative of data written in the memory layer change so that irreversible data destruction occurs.

On the other hand, in a range (> 16 000 A/m (200 Oe)) where the reproducing magnetic field intensity is higher than the recording magnetic field (16 000 A/m (200 Oe)), the C/N ratio equivalent to that obtained at 1.0 mW can be obtained as far as the reproducing power is not extremely high, and a drop of the C/N ratio is not observed even if data are reproduced at 3.0 mW which is equal to the bottom power at recording.

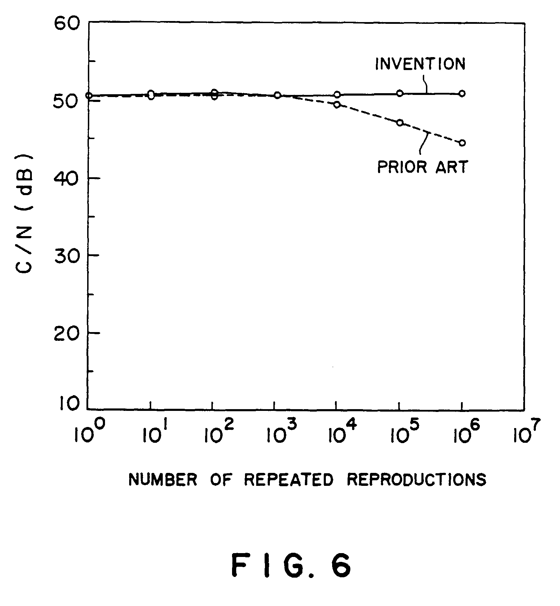

Fig. 6 shows the test results obtained when data are repeatedly reproduced in accordance with the magneto-optical recording/reproducing method according to the present invention in comparison with the prior-art method. The solid line shows the relationship between the C/N ratio and the number of repeated reproductions obtained when recorded data are reproduced at a reproducing magnetic field intensity of 32 000 A/m (400 Oe) and a reproducing laser power of 1.5 mW in accordance with the present invention, which indicates that no drop in the C/N ratio (indicative of reproduced signal degradation) is observed after data have been repeatedly reproduced in the order of $10^6$ times. The dashed lines shows the similar relationship obtained when recorded data are reproduced at a reproducing magnetic field intensity of 0 Oe and a reproducing laser power of 1.5 mW in accordance with the prior-art method, which indicates that the C/N ratio starts to be degraded at about $10^4$ times and therefore the recorded data are regarded as being destructed. In other words, the present invention can prevent the recorded data from being destructed or the reproduced signals from being degraded even after data have been repeatedly reproduced, thus resulting in a higher reproduced data reliability.

The similar test results as described above can be observed in the magneto-optical recording mediums made of various different materials or formed of exchange coupled multilayer magnetic films of different types.

The present invention is not limited to only the above-mentioned embodiments, and therefore modified into various ways. For instance, the apparatus shown in Fig. 3 or 4 can be utilized for only reproducing data. In this case, the initializing magnet 34 or 61 can be eliminated as far as the recording medium has already been passed through an initializing magnetic field before reproduction.

As described above, the present invention provides a magneto-optical method and apparatus for recording/reproducing data, which is usable in a wide allowable range of the ambient temperature and the reproducing laser power in data reproducing operation. In addition, the present invention provides a magneto-optical apparatus for recording/reproducing data, by which the recorded data are not destructed or the reproduced signals are not degraded after repeated data reproductions, and a high reliability can be realized even when data are reproduced from a high sensitive recording medium.

## Claims

1. A magneto-optical method of recording/reproducing data by use of a magneto-optical recording medium (31) formed by laminating a first magnetic layer (23) having a relatively high coercive force at room temperature and a relatively low Curie point and a second magnetic (24) layer having a relatively low coercive force at room temperature and a relatively high Curie point so that these magnetic layers are exchange coupled to each other, comprising the steps of:

   (a) arranging the magnetization direction only of the second magnetic layer (24) in one direction by applying an initializing magnetic field to the recording medium (31);
   (b) selecting either one of a first record or a second record according to data to be recorded, the first record being to magnetize only a heated area on the first magnetic layer (23) in a direction stable with respect to the second magnetic layer (24) by applying a recording magnetic field and simultaneously irradiating a laser beam for realizing a first heated condition to the recording medium (31), and the second record being to first reverse the magnetization direction on the heated area of the second magnetic layer (24) and then to magnetize the first magnetic layer (23) in the direction stable with respect to the second magnetic layer (24) by applying a recording magnetic field and simultaneously irradiating a laser beam for realizing a second heated condition upon the recording medium; characterised by

   (c) again arranging the magnetization direction only of the second magnetic layer (24) in said direction by applying the initializing magnetic field to the area at which the first and second records have been performed; and
   (d) reproducing data by applying a reproducing laser beam and a reproducing magnetic field to the area at which the first and second records have been performed in the first magnetic layer after the initializing magnetic field has been applied, the direction of the reproducing magnetic field being the same as the direction of the recording magnetic field.

2. A method of claim 1, characterised by reproducing data recorded as magnetization directions in the first magnetic layer (23) by applying a reproducing magnetic field in the same direction as the recording magnetic field after the initializing magnetic field has been applied and simultaneously a laser beam to the area at which the first and second records are performed.

3. A method of claim 2, characterised by said first magnetic layer being provided with magnetic characteristics dominant in transition metal magnetic moment at room temperature, and said second magnetic layer being provided with magnetic characteristics dominant in rare-earth magnetic moment at room temperature and having compensation point at a temperature higher than room temperature.

4. A method of claim 3, characterised by the reproducing magnetic field being stronger than the recording magnetic field and weaker than 80 000 A/m (1000 Oe).

## Patentansprüche

1. Ein magnetooptisches Verfahren zur Aufzeichnung/Wiedergabe von Daten unter Verwendung eines magnetooptischen Aufzeichnungsmediums (31), das durch Laminieren einer ersten, magnetischen Schicht (23), die eine relativ große Koerzitivkraft bei Raumtemperatur und einen relativ niedrigen Curie-Punkt aufweist, und einer zweiten, magnetischen Schicht (24) gebildet wird, die eine relativ niedrige Koerzitivkraft bei Raumtemperatur und einen relativ hohen Curie-Punkt aufweist, so daß diese magnetischen Schichten miteinander austauschgekoppelt sind, die Schritt umfassend:

   (a) Anordnen der Magnetisierungsrichtung nur der zweiten, magnetischen Schicht (24) in einer Richtung durch Anwenden eines initialisierenden Magnetfeldes auf das Aufzeichnungsmedium (31);

(b) Auswählen einer von einer ersten Aufzeichnung oder einer zweiten Aufzeichnung gemäß Daten, die aufgezeichnet werden sollen, wobei die erste Aufzeichnung ist, nur einen erwärmten Bereich bei der ersten magnetischen Schicht (23) in einer in bezug auf die zweite, magnetische Schicht (24) stabilen Richtung zu magnetisieren, indem ein Aufzeichnungsmagnetfeld angewendet wird und gleichzeitig ein Laserbündel aufgestrahlt wird, um einen ersten, erwärmten Zustand bei dem Aufzeichnungsmedium (31) herzustellen, und die zweite Aufzeichnung ist, zuerst die Magnetisierungsrichtung bei dem erwärmten Bereich der zweiten, magnetischen Schicht (24) umzukehren und dann die erste, magnetische Schicht (23) in der in bezug auf die zweite, magnetische Schicht (24) stabilen Richtung zu magnetisieren, indem ein Aufzeichnungsmagnetfeld angewendet und gleichzeitig mit einem Laserbündel bestrahlt wird, um einen zweiten, erwärmten Zustand bei dem Aufzeichnungsmedium herzustellen;

**gekennzeichnet durch**

(c) erneutes Anordnen der Magnetisierungsrichtung nur der zweiten, magnetischen Schicht (24) in der genannten Richtung, indem das initialisierende Magnetfeld auf den Bereich angewendet wird, bei dem die erste und zweite Aufzeichnung ausgeführt worden sind; und

(d) Wiedergeben von Daten, indem ein Wiedergabelaserbündel und ein Wiedergabemagnetfeld auf den Bereich, bei dem die erste und zweite Aufzeichnung in der ersten, magnetischen Schicht aufgezeichnet worden sind, angewendet werden, nachdem das initialisierende Magnetfeld angewendet worden ist, wobei die Richtung des Wiedergabemagnetfeldes die gleiche wie die Richtung des Aufzeichnungsmagnetfeldes ist.

2. Ein Verfahren des Anspruchs 1, **gekennzeichnet durch** Wiedergabe von Daten, die als Magnetisierungsrichtungen in der ersten, magnetischen Schicht (23) aufgezeichnet worden sind, indem ein Wiedergabemagnetfeld in der gleichen Richtung wie das Aufzeichnungsmagnetfeld, nachdem das initialisierende Magnetfeld angewendet worden ist, und gleichzeitig ein Laserbündel bei dem Bereich angewendet werden, bei dem die erste und zweite Aufzeichnung ausgeführt worden sind.

3. Ein Verfahren des Anspruchs 2, **dadurch gekenn-**

**zeichnet**, daß die genannte erste, magnetische Schicht mit magnetischen Eigenschaften versehen ist, die bei dem magnetischen Moment von Übergangsmetall bei Raumtemperatur vorherrschend sind, und die genannte zweite, magnetische Schicht mit magnetischen Eigenschaften versehen ist, die bei dem magnetischen Moment von Seltenerden bei Raumtemperatur vorherrschend sind und einen Ausgleichspunkt bei einer höheren Temperatur als Raumtemperatur haben.

4. Ein Verfahren des Anspruchs 3, **dadurch gekennzeichnet**, daß das Wiedergabemagnetfeld stärker als das Aufzeichnungsmagnetfeld und schwächer als 80 000 A/m (1000 Oe) ist.

**Revendications**

1. Procédé magnéto-optique d'enregistrement/ reproduction de données en utilisant un support d'enregistrement magnéto-optique (31) formé en stratifiant une première couche magnétique (23) ayant une force coercitive relativement élevée à température ambiante et un point de Curie relativement faible et une deuxième couche magnétique (24) ayant une force coercitive relativement faible à température ambiante et un point de Curie relativement élevé de telle sorte que ces couches magnétiques sont couplées par échange l'une avec l'autre, comportant les étapes consistant à :

(a) disposer la direction de magnétisation uniquement de la deuxième couche magnétique (24) dans une direction en appliquant un champ magnétique d'initialisation sur le support d'enregistrement (31);
(b) choisir un premier enregistrement ou un deuxième enregistrement en fonction des données devant être enregistrées, le premier enregistrement étant pour magnétiser uniquement une zone chauffée sur la première couche magnétique (23) dans une direction stable par rapport à la deuxième couche magnétique (24) en appliquant un champ magnétique d'enregistrement et en irradiant simultanément un faisceau laser afin de réaliser une premier condition chauffée sur le support d'enregistrement (31), et le deuxième enregistrement étant pour inverser tout d'abord la direction de magnétisation sur la zone chauffée de la deuxième couche magnétique (24) et ensuite pour magnétiser la première couche magnétique (23) dans la direction stable par rapport à la deuxième couche magnétique (24) en appliquant un champ magnétique d'enregistrement et en irradiant simultanément un faisceau laser afin de réaliser une deuxième condition chauffée sur le support d'enregistrement;

caractérisé par le fait de

(c) disposer à nouveau la direction de magnétisation uniquement de la deuxième couche magnétique (24) dans ladite direction en appliquant le champ magnétique d'initialisation sur la zone où les premier et deuxième enregistrements ont été réalisés; et

(d) reproduire des données en appliquant un faisceau laser de reproduction et un champ magnétique de reproduction sur la zone où les premier et deuxième enregistrements ont été réalisés dans la première couche magnétique une fois que le champ magnétique d'initialisation a été appliqué, la direction du champ magnétique de reproduction étant la même que la direction du champ magnétique d'enregistrement.

2. Procédé selon la revendication 1, caractérisé par la reproduction de données enregistrées sous forme de directions de magnétisation dans la première couche magnétique (23) en appliquant un champ magnétique de reproduction dans la même direction que le champ magnétique d'enregistrement une fois que le champ magnétique d'initialisation a été appliqué et simultanément un faisceau laser sur la zone où les premier et deuxième enregistrements sont réalisés.

3. Procédé selon la revendication 2, caractérisé par le fait que ladite première couche magnétique est pourvue de caractéristiques magnétiques dominantes dans le moment magnétique de métal de transition à température ambiante, et ladite deuxième couche magnétique est pourvue de caractéristiques magnétiques dominantes dans le moment magnétique de terre rare à température ambiante et ayant un point de compensation à une température plus élevée que la température ambiante.

4. Procédé selon la revendication 3, caractérisé par le fait que le champ magnétique de reproduction est plus fort que le champ magnétique d'enregistrement et plus faible que 80000 A/m (1000 Oe).

F I G. I

F I G. 2

EP 0 462 843 B1

F I G. 3

F I G. 4

FIG. 5

EP 0 462 843 B1

FIG. 6

12